# EUROPEAN PATENT APPLICATION

(11) **EP 2 945 116 A1**
(43) Date of publication of application: **18.11.2015**
(21) Application number: 14465507.3
(22) Date of filing: 15.05.2014
(51) Int. Cl.: G06T 5/00, G06T 5/50, B60S 1/08

(54) **METHOD AND APPARATUS FOR PROVIDING AN AUGMENTED IMAGE OF A VEHICLE'S SURROUNDING**

(71) Applicant: Continental Automotive GmbH, 30165 Hannover (DE)
(72) Inventor: Sav, Claudiu, 300144 Timisoara (RO); Krökel, Dieter, 88097 Eriskirch (DE)

(57) **Abstract**

An apparatus (1) for providing an augmented image of the surrounding of a vehicle said apparatus comprising at least one image sensor unit (2) adapted to provide sensor images of the vehicle's surrounding; a classification unit (3) adapted to classify image elements within the provided sensor images based on determined motion patterns of the image elements; and an image processing unit (4) adapted to remove image elements classified by said classification unit (3) as precipitation image elements caused by atmospheric precipitation from the provided sensor images to generate the augmented image of the vehicle's surrounding.

## Description

The invention relates to a method and apparatus for providing an augmented image of a surrounding of a vehicle where image areas corrupted by atmospheric precipitations are removed.

Vehicles nowadays comprise a plurality of sensor units to generate images of the surrounding of the vehicle. These images can serve different purposes. The generated images can be displayed to a driver of the vehicle supporting the driver when performing driving manoeuvres. Further, the images can be used to provide driver assisting functions to support the driver when driving the vehicle. The sensor units of a driver assisting system within the vehicle can comprise optical sensors and/or vehicle cameras providing analogue or digital images representing the surrounding of the vehicle. Sensor images provided by optical sensor units within the vehicle can be impaired by atmospheric precipitation such as rain droplets, snowflakes or hail falling with a precipitation falling speed on the optical sensor units of the vehicle. The atmospheric precipitation such as rain droplets, snowflakes or hail can alter significantly the perceived image, especially if light such as sunlight or light from other vehicles headlights is scattered in the direction of the image sensor unit or vehicle camera providing the sensor images. The impaired image when displayed to the driver can lead to wrong decisions of the driver when manoeuvring the car or vehicle causing severe damage. Moreover, the impaired sensor image can lead to an impairment of the functions provided by an automatic driver assistance system using the generated image data.

Accordingly, it is an object of the present invention to provide a method and apparatus for providing an augmented image of the vehicle's surrounding when atmospheric precipitations are present.

This object is achieved by a method comprising the features of claim 1.

Accordingly, the present invention provides according to a first aspect of the present invention a method for providing an augmented image of the surrounding of a vehicle comprising the steps of:
providing sensor images of the vehicle's surrounding by at least one image sensor unit of the vehicle;
classifying image elements within the provided sensor images based on determined motion patterns of the image elements; and
removing image elements classified as precipitation image elements caused by atmospheric precipitation from the provided image sensor to generate the augmented image of the vehicle's surrounding.

In a possible embodiment of the method according to the present invention, the sensor images comprise camera images provided by a vehicle camera of said vehicle.

In a further possible embodiment of the method according to the present invention, the augmented image is displayed on a display unit of the vehicle.

In a still further possible embodiment of the method according to the present invention, the image elements classified as precipitation image elements within the sensor images are substituted by image data calculated from the remaining sensor data of the sensor images.

In a still further possible embodiment of the method according to the present invention, the classified precipitation image elements are replaced by image data copied from other areas within the sensor image.

In a still further possible embodiment of the method according to the present invention, the classified precipitation image elements are replaced by filtered image data calculated from other areas within the sensor image depending on the determined motion patterns of the precipitation image elements.

In a still further possible embodiment of the method according to the first aspect of the present invention, the determined motion patterns of the image elements within the provided sensor images comprise motion vectors and/or motion trajectories.

In a possible embodiment of the method according to the present invention, the motion vectors and/or motion trajectories of the image elements within the provided sensor images are determined from a sequence of sensor image frames provided by the at least one sensor unit and/or other parameters comprising vehicle speed, vehicle direction, image sensor unit orientation and/or precipitation falling speed.

In a still further possible embodiment of the method according to the first aspect of the present invention, the atmospheric precipitations causing the precipitation image elements comprise rain droplets and/or snowflakes and/or hail falling with a precipitation falling speed on the at least one image sensor unit of the vehicle.

In a still further possible embodiment of the method according to the first aspect of the present invention, the falling speed of the atmospheric precipitations is detected and used to determine motion patterns of the precipitation image elements caused by the atmospheric precipitations.

In a further possible embodiment of the method according to the first aspect of the present invention, the motion patterns of the precipitation image elements within the sensor images are used to detect different types of atmospheric precipitations causing the precipitation image elements.

In a still further possible embodiment of the method according to the first aspect of the present invention, a wiper of the vehicle is controlled depending on the detected type of atmospheric precipitation.

The invention further provides according to a second aspect an apparatus for providing an augmented image of the surrounding of a vehicle comprising the features of claim 11.

Accordingly, the invention provides according to the second aspect of the present invention an apparatus for providing an augmented image of the surrounding of a vehicle,
said apparatus comprising
at least one image sensor unit adapted to provide sensor images of the vehicle's surrounding,
a classification unit adapted to classify image elements within the provided sensor images based on determined motion patterns of the image elements and
an image processing unit adapted to remove image elements classified by the classification unit as precipitation image elements caused by atmospheric precipitation from the provided sensor images to generate the augmented image of the vehicle's surrounding.

In a possible embodiment of the apparatus according to the second aspect of the present invention, the apparatus comprises a display unit adapted to display the generated augmented image.

In a further possible embodiment of the apparatus according to the second aspect of the present invention, the determined motion patterns of the image elements within the provided sensor images comprise motion vectors and/or motion trajectories determined by said classification unit from the sequence of sensor image frames provided by said at least one image sensor unit and/or other parameters comprising vehicle speed, vehicle direction, image sensor unit orientation and/or precipitation falling speed detected by associated sensors of the vehicle.

In a still further possible embodiment of the apparatus according to the second aspect of the present invention, the classification unit of the apparatus is adapted to detect different types of atmospheric precipitations based on the determined motion patterns of image elements classified as precipitation image elements by said classification unit.

In a further possible embodiment of the apparatus according to the second aspect of the present invention, the apparatus comprises a wiper control unit adapted to control a wiper of the vehicle depending on the type of atmospheric precipitation detected by said classification unit.

The invention further provides according to a third aspect a driver assistance system comprising an apparatus for providing an augmented image of the vehicle surrounding according to the second aspect of the present invention.

The invention further provides according to a fourth aspect a vehicle comprising a driver assistance system according to the third aspect of the present invention.

The invention further provides according to a fifth aspect a programme comprising instructions adapted to perform the method according to the first aspect of the present invention.

In the following, possible embodiments of the different aspects of the present invention are described with reference to the enclosed figures in more detail.
- Figure 1: shows a block diagram of a possible exemplary embodiment of an apparatus for providing an augmented image of a vehicle's surrounding according to an aspect of the present invention;
- Figure 2: shows a flowchart of a possible embodiment of a method for providing an augmented image of a vehicle's surrounding according to a further aspect of the present invention;
- Figure 3: shows an exemplary view of a vehicle's surrounding to illustrate the operation of the method and apparatus according to the present invention;
- Figure 4: shows a further exemplary view for illustrating the operation of the method and apparatus according to the present invention.

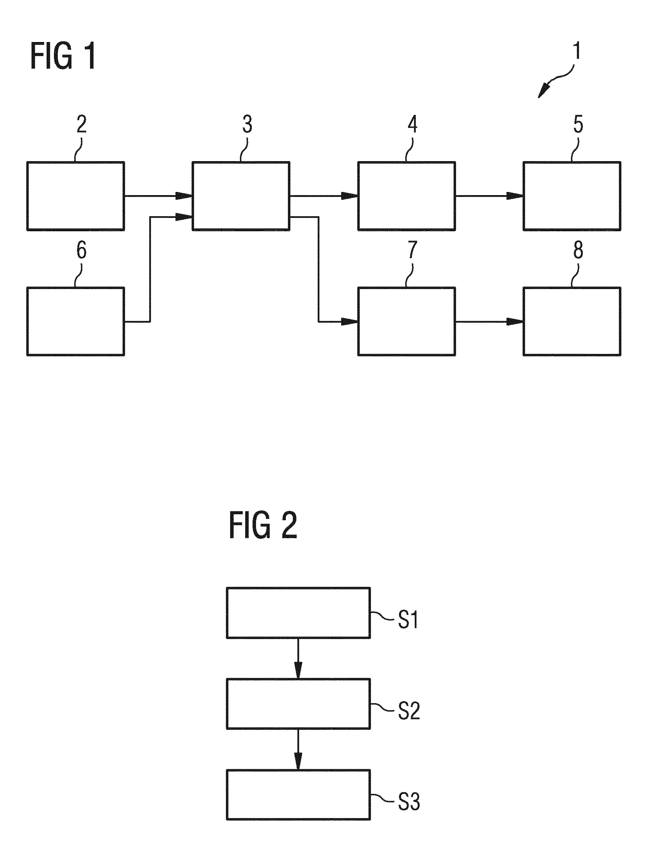

As can be seen in the block diagram of Figure 1, an apparatus 1 for providing an augmented image of a vehicle's surrounding comprises in the exemplary illustrated embodiment several units. The apparatus 1 comprises at least one image sensor unit 2 adapted to provide sensor images of the vehicle's surrounding. The image sensor unit 2 can comprise a vehicle camera or other optical sensor units adapted to provide an optical image of the vehicle's surrounding. The sensor images generated by the image sensor unit 2 can comprise digital and/or analogue images which are supplied by the image sensor unit 2 to a classification unit 3 of the apparatus 1. The classification unit 3 is adapted to classify image elements within the provided sensor images received from the image sensor unit 2 based on determined motion patterns of the image elements. The determined motion patterns of the image elements within the provided sensor images can comprise in a possible embodiment motion vectors and/or motion trajectories determined or calculated from a sequence or sequences of sen-sor image frames provided by the at least one sensor unit 2 and/or other parameters comprising the vehicle's speed, the vehicle's direction, the orientation of the image sensor unit 2 and/or a precipitation falling speed of an atmospheric precipitation such as rain droplets, snowflakes or hail falling on the image sensor unit 2. The atmospheric precipitations can cause precipitation image elements within the sensor images output by the image sensor unit 2. These precipitation image elements can comprise rain drops caused by rain and/or fog, snowflakes or hail falling from the sky with a corresponding precipitation falling speed. The classification unit 3 is adapted to classify the image elements and to determine or detect specific image elements caused by atmospheric precipitation and to classify them as precipitation image elements based on the determined motion patterns of the image elements comprising motion vectors and/or motion trajectories.

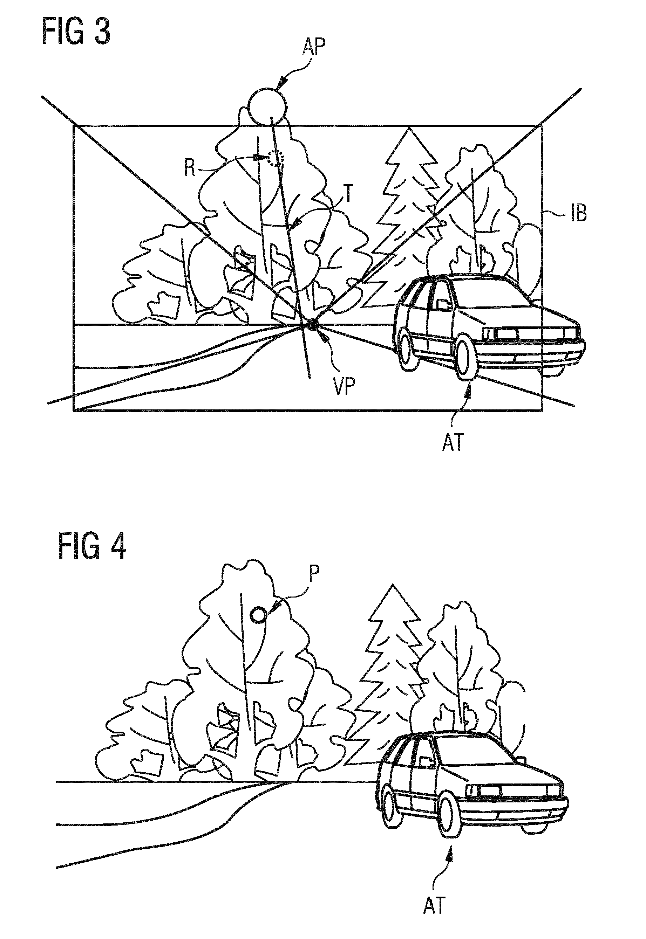

The apparatus 1 further comprises an image processing unit 4 connected to the classification unit 3, wherein the image processing unit 4 is adapted to remove image elements classified by said classification unit 3 as precipitation image elements caused by atmospheric precipitation from the provided sensor images to generate an augmented image of the vehicle's surrounding. The augmented image generated by the image processing unit 4 can be output by the image processing unit 4 to a display unit 5, as illustrated in Figure 1. The augmented image can be displayed on the display unit 5 to the vehicle's driver to support him/her during driving manoeuvres. In a further possible embodiment, the processed augmented image can be supplied to a further data processing unit which uses the augmented image to calculate the control data for functions of a driver assistance system. In a possible embodiment, the image processing unit 4 is adapted to substitute image elements classified by the classification unit 3 as unwanted precipitation image elements with image data calculated from the remaining sensor data of the sensor images received from the image sensor unit 2. In a possible embodiment, the classified precipitation image elements are replaced by image data copied from other unaffected areas within the received sensor images. In a still further possible embodiment, the classified precipitation image elements are replaced by filtered image data calculated from other areas within the sensor images received from the image sensor unit 2 depending on the determined motion patterns of the precipitation image elements. The determined motion patterns of the image elements within the provided sensor images can comprise in a possible embodiment motion vectors and/or motion trajectories which are determined by the classification unit 3 from a sequence of sensor image frames received from the image sensor unit 2 and/or other parameters comprising the vehicle's speed and/or the vehicle's direction and/or the precipitation falling speed detected by further associated sensors 6 of the vehicle. Further, the motion patterns comprising motion vectors and/or motion trajectories can be determined based on configuration data indicating for instance the orientation of the image sensor unit 2 when the vehicle is moving with the vehicle's velocity or vehicle's speed V. Motion vectors and/or motion trajectories determined by the classification unit 3 can use previous image frames and other information data, in particular sensor data provided by vehicle speed sensors and/or direction sensors or camera orientation sensors. The image elements are differentiated based on the calculated motion vectors and/or motion trajectories and/or previous known image elements. The main information used by the classification unit 3 are the sensor images received from the image sensor unit 2. The other information like the vehicle's speed and the vehicle's direction or the camera orientation are used to determine the motion patterns of the image elements within the provided sensor images. Different image elements can have different motion patterns depending also on the orientation of the image sensor unit 2 which can be located at the front, rear, or side of the vehicle. Such elements illustrating a background or a landscape do collapse to or originate from a vanishing point VP, as also illustrated in Figure 3. The adjacent traffic AT such as another vehicle in the vicinity of the vehicle does keep a relatively constant position on the captured image depending on its relative speed. The precipitation AP image elements caused by atmospheric precipitation such as rain droplets or snowflakes do move depending on the camera orientation. In case of a front facing camera of the vehicle, the precipitation image elements will move down, whereas precipitation image elements on the surface of a rear facing camera tend to move up within the sensor images or sensor image frames generated by the camera. The gradient of motion is also influenced by the type of precipitation and the vehicle's speed V and direction as well as by other atmospheric factors such as relative wind speed. The atmospheric precipitation AP can comprise different types such as rain droplets, snowflakes or hail which fall with different precipitation falling speeds on the image sensor unit of a camera 2. Whereas rain drops fall with a relative high falling speed of around 9 m/sec, drizzle drops fall with a speed of around 2 m/sec and snowflakes drop at a lower speed of around 1.4 m/sec. Persistent image problems like dirt on optical elements are out of focus and only introduce a constant region with sharpness level being worse than the surrounding areas.

Depending on a ratio between the vehicle's moving speed and the falling speed of the atmospheric precipitation AP, the precipitation image elements caused by the atmospheric precipitation AP can come into the image frame of a sensor image generated by the image sensor unit 2 from different sides, as also illustrated in Figure 3. As can be seen in Figure 3 of the shown exemplary embodiment, the sensor image is generated by a vehicle camera 2 having an image border IB defining an image frame showing a portion of the vehicle's surrounding. In the example illustrated in Figure 3, the vehicle is driving on a street through a landscape comprising a plurality of different image elements such as trees or fields. Further, adjacent traffic AT comprising another vehicle is moving in the contrary direction on the same street as the vehicle. In the shown exemplary scene, an atmospheric precipitation AP such as a water droplet enters the frame of the sensor camera image from above which is typically the case when the camera is located at the front of the vehicle and the vehicle is moving through falling rain. Depending on the vehicle's speed and the precipitation falling speed and other factors or parameters such as wind speed, a motion pattern and/or a motion trajectory T of the atmospheric precipitation AP moving on the surface of the image sensor unit 2 causing unwanted precipitation image elements within the sensor images will vary. The motion pattern of the precipitation image elements caused by the atmospheric precipitation AP within the sensor image can be calculated and predicted on the basis of parameters comprising the vehicle's speed, the vehicle's direction, the camera's orientation, the precipitation falling speed and other factors such as the relative wind speed. In the shown exemplary view of Figure 3, the motion trajectory T of a precipitation image element can be calculated. In the shown example, the precipitation image element will move from the upper frame image border towards the centre of the sensor image. The calculation algorithm performed by the classification unit 3 can be optimized such that it looks for new precipitation image elements caused by atmospheric precipitations only in a band at the sides of interest of the image frame IB depending on the predicted motion vectors and/or motion trajectories of the precipitation image elements. For instance, if the vehicle is driving through falling rain and the image sensor unit or camera 2 is mounted at the front side of the moving vehicle, it is likely that precipitation image elements caused by atmospheric precipitation AP, i.e. the falling rain droplets, will enter the sensor images from above, i.e. from the upper image border of the image frame, as illustrated in Figure 3. If the vehicle's speed is significantly higher than the falling speed of the atmospheric precipitation elements, the precipitation image elements will first appear in the centre of the generated sensor images and will have a motion trajectory to one side of the sensor image, quite similar to the motion pattern of landscape elements but with a different relative velocity due to the proximity to the image sensor unit 2. Figure 3 illustrates a region R of the image frame that will be used in the next frame to remove the water droplet.

Figure 4 illustrates a calculated predicted position P of the precipitation image elements caused by the water droplet in the subsequent image frame.

The image processing unit 4 generates the augmented image. In a possible embodiment, the image processing unit 4 replaces the unwanted precipitation image elements by image data calculated from the remaining data of the sensor images based on the determined motion patterns of the precipitation image elements, in particular image motion vectors MV of the precipitation image elements. Using image information and/or image data from a surrounding area can be used by the image processing unit 4 to calculate image data to substitute the precipitation image elements within the received sensor images. The precipitation image elements are replaced in a possible embodiment by image data copied from other unaffected areas within the same sensor image. Further, the image data can be calculated by interpolation of data in a surrounding region within the same sensor image. In a possible embodiment, the image processing unit 4 can comprise image filters adapted to filter data in the vicinity of the precipitation image elements which are used to substitute the precipitation image elements within the sensor images received by the image sensor unit 2. The image processing unit 4 is adapted to remove precipitation image elements like snowflakes or water droplets in the close proximity of the camera, up to a few metres, where the precipitation effect on the image quality is relatively high. The augmented image output by the image processing unit 4 provides an improved image, where snowflakes and/or rain droplets in the proximity of the image sensor unit 2 are removed. The image processing unit 4 is adapted to replace areas corrupted by atmospheric precipitations AP with calculated image data generated from existing valid areas by copying, scaling and interpolation based on the predicted motion pattern or motion trajectory of the precipitation image elements to be removed from the sensor images. Especially at night, rain droplets and snowflakes illuminated by vehicle's headlight can reduce the visibility for the driver of the vehicle significantly. The image augmentation algorithm provided by the apparatus 1, as illustrated in Figure 1, does increase the detection range at least for a couple of metres. The back scatter of light from snowflakes is even stronger than the back scatter caused by rain droplets. Snowflakes are falling much slower than rain droplets and can therefore be easier detected than rain droplets. In a possible embodiment, the classification unit 3 of the apparatus 1 is adapted to detect different types of atmospheric precipitation AP such as snowflakes or rain droplets based on the determined motion patterns of the image elements classified as precipitation image elements. Accordingly, the apparatus and method according to the present invention can not only be used to provide an augmented improved image but also to detect different types of atmospheric precipitations such as snowflakes, rain or hail. In a possible embodiment, as illustrated in Figure 1, the classification unit 3 can indicate the detected type of the atmospheric precipitations to a wiper control unit 7. The wiper control unit 7 is adapted to control in a possible embodiment a wiper 8 of the vehicle depending on the type of atmospheric precipitation detected by the classification unit 3. Accordingly, in this embodiment, the classification unit 3 is adapted to detect for instance snowfall and differentiate it from other kinds of precipitation like rain and hail due to their different falling speeds and back scatter properties. The derived information can also be used to enhance camera-based rain sensor capabilities. The camera-based rain sensor relies on the fact that the intensity of light reflected in the windshield of the vehicle is reduced due to humidity on the outer surface of the windshield. In order to detect snowflakes or snow by such a rain sensor, the snow must melt on the windscreen. With the apparatus 1 according to the present invention snowflakes can be detected even before the snow melts enabling a wiper system of the vehicle for a more appropriate reaction.

The present invention further provides according to a further aspect a wiper control system comprising a classification unit such as the classification unit 3 illustrated in Figure 1 adapted to detect different types of atmospheric precipitations based on determined motion patterns of image elements.

Figure 2 shows a flowchart for illustrating a possible embodiment of a method for providing an augmented image of a vehicle surrounding according to an aspect of the present invention.

In a first step S1, sensor images of the vehicle's surrounding are provided by at least one image sensor unit such as a camera of the vehicle.

In a further step S2, image elements within the provided sensor images are classified based on determined motion patterns of the image elements.

In a further step S3, image elements classified as precipitation image elements caused by atmospheric precipitation AP are removed from the provided sensor images to generate the augmented image of the vehicle's surrounding. The augmented image can then be displayed on a display unit 5 of the vehicle or used by an automatic driver assistance system of the vehicle.

The method illustrated in Figure 2 can be implemented by a computer-controlled programme executed in real time by a computation unit including at least one microprocessor. In a possible embodiment the calculated augmented image can also be transmitted via a wireless link of the vehicle to a remote base station for further processing. The image element classified in step S2 as precipitation image elements can be used to derive its motion patterns and to use calculated determined motion patterns to detect different types of atmospheric precipitations such as snowflakes, rain or hail. The detected different types of atmospheric precipitations AP can in turn be used to control actuators of the vehicle, in particular wipers such as windshield wipers of the vehicle.

## Claims

1. A method for providing an augmented image of the surrounding of a vehicle comprising the steps of:
(a) providing (S1) sensor images of the vehicle's surrounding by at least one image sensor unit (2) of said vehicle;
(b) classifying (S2) image elements within the provided sensor images based on determined motion patterns of the image elements; and
(c) removing (S3) image elements classified as precipitation image elements caused by atmospheric precipitation from the provided sensor images to generate the augmented image of the vehicle's surrounding.

2. The method according to claim 1,
wherein the sensor images comprise camera images provided by at least one vehicle camera of said vehicle.

3. The method according to claim 1 or 2,
wherein the augmented image is displayed on a display unit (5)of said vehicle.

4. The method according to one of the preceding claims 1 to 3,
wherein the image elements classified as precipitation image elements within the sensor images are substituted by image data calculated from the remaining sensor data of the sensor images.

5. The method according to claim 4,
wherein the classified precipitation image elements are replaced by image data copied from other areas within the sensor images or by filtered image data calculated from other areas within the sensor images depending on the determined motion patterns of the precipitation image elements.

6. The method according to claim 5,
wherein the determined motion patterns of the image elements within the provided sensor images comprise motion vectors and/or trajectories determined from a sequence of sensor image frames provided by said at least one image sensor unit (2) and/or other parameters comprising vehicle speed, vehicle direction, image sensor unit orientation and/or precipitation falling speed.

7. The method according to one of the preceding claims 1 to 6,
wherein the atmospheric precipitations causing the precipitation image elements comprise rain droplets and/or snowflakes and/or hail falling with a precipitation falling speed on the at least one image sensor unit (2) of the vehicle.

8. The method according to claim 6 or 7,
wherein the falling speed of the atmospheric precipitations is detected and used to determine motion patterns of the precipitation image elements caused by the atmospheric precipitations.

9. The method according to claim 8,
wherein the motion patterns of the precipitation image elements within the sensor images are used to detect different types of atmospheric precipitations causing the precipitation image elements.

10. The method according to claim 9,
wherein a wiper (8) of the vehicle is controlled depending on the detected type of atmospheric precipitation.

11. An apparatus for providing an augmented image of the surrounding of a vehicle said apparatus (1) comprising:
(a) at least one image sensor unit (2) adapted to provide sensor images of the vehicle's surrounding;
(b) a classification unit (3) adapted to classify image elements within the provided sensor images based on determined motion patterns of the image elements; and
(c) an image processing unit (4) adapted to remove image elements classified by said classification unit (3) as precipitation image elements caused by atmospheric precipitation from the provided sensor images to generate the augmented image of the vehicle's surrounding.

12. The apparatus according to claim 11 comprising a display unit (5) adapted to display the generated augmented image.

13. The apparatus according to claim 11 or 12,
wherein the determined motion patterns of the image elements within the provided sensor images comprise motion vectors and/or trajectories determined by said classification unit (3) from a sequence of sensor image frames provided by said at least one image sensor unit (2) and/or other parameters comprising vehicle speed, vehicle direction, image sensor unit orientation and/or precipitation falling speed detected by associated sensors of the vehicle.

14. The apparatus according to claim 13,
wherein the classification unit (3) is adapted to detect different types of atmospheric precipitations based on the determined motion patterns of image elements classified by the classification unit (3) as precipitation image elements.

15. The apparatus according to claim 14 comprising a wiper control unit (7) adapted to control a wiper (8) of the vehicle depending on the type of atmospheric precipitation detected by said classification unit (3).
